# EUROPEAN PATENT APPLICATION

(11) **EP 2 493 190 A1**
(43) Date of publication of application: **29.08.2012**
(21) Application number: 10825030.9
(22) Date of filing: 21.10.2010
(51) Int. Cl.: H04N 7/173, H04N 5/44

(54) **MASTER DEVICE, MAP TABLE UPDATE METHOD, PROGRAM, AND RECORDING MEDIUM**

(30) Priority: 23.10.2009 JP 2009244480
(71) Applicant: Sharp Kabushiki Kaisha, Osaka-shi, Osaka 545-8522 (JP)
(72) Inventor: NAGANO, Tomohiro, Osaka-shi Osaka 545-8522 (JP); YOSHIDA, Tatsuya, Osaka-shi Osaka 545-8522 (JP)
(74) Representative: Müller - Hoffmann & Partner
(86) International application number: PCT/JP2010/068625
(87) International publication number: WO 2011/049181

(57) **Abstract**

Control section (20) of a master device of the present invention includes: address acquisition section (21) for, when logical and physical addresses of playback device (200) being on a network in which the master device is a route device are acquired, registering the logical and physical addresses in a map table so that the logical and physical addresses are associated; command issuing section (23) for, when a physical address identical with the acquired physical address has been stored in the map table, issuing a command for confirming whether or not a device having a logical address associated with the physical address identical with the acquired physical address is on the network; and address table modifying means (24) for, when no device having the associated logical address is on the network, deleting, from the map table, the physical address identical with the acquired physical address.

## Description

### Technical Field

The present invention relates to a master device which can control other devices connected to a network in which the master device serves as a route device.

### Background Art

In recent years, an HDMI (High-Definition Multimedia Interface) terminal has been provided in a television, AV equipment, and the like, as a standard component, and such a television and AV equipment have been in widespread use. As the television including the HDMI terminal and the AV equipment including the HDMI terminal become widely used, the television and the AV equipment are now generally connected to each other via an HDMI cable.

The HDMI makes it possible to transmit a video and an audio via one cable. Further, a CEC (Consumer Electronics Control) command defined in an HDMI standard makes it possible for various devices to work in combination with each other. In order to cause the devices to work in combination with each other with the use of the CEC command, the following two addresses are allocated to each of the devices connected to each other via the HDMI cable: (i) a logical address for designating a device by indicating a type of the device, and (ii) a physical address for designating a device by indicating where the device is located on an HDMI network which is constituted by the devices connected to each other via the HDMI cable.

However, a device serving as a route device on the HDMI network cannot recognize disconnection of a device from the HDMI network in which the device serves as the route device. For this reason, there has been such a problem that the route device transmits a CEC command to the device which has been already disconnected from the HDMI network, for example.

In order to solve such a problem, there has been known a method disclosed in Patent Literature 1, for example. Patent Literature 1 discloses such a technique that <Polling Message> is transmitted as a CEC command at certain time intervals to all devices to which a television is connected, so that a device serving as a route device in a network recognizes, at certain time intervals, whether or not there is a device(s) connected to the network.

### Citation List

### [Patent Literature]

[Patent literature 1]
   Japanese Patent Application Publication, Tokukai, No. 2009-194753 A (Publication Date: August 27, 2009)

### Summary of Invention

### Technical Problem

However, according to the technique disclosed in Patent Literature 1, it is impossible to send/receive a CEC command between the devices constituting the HDMI network during a time period in which the television carries out a process for recognizing the devices on the HDMI network. Further, it is necessary for the television to check, at certain time intervals, whether or not there is a device(s) connected to the HDMI network in which the television serves as the route device, regardless of (i) whether or not there is a change in a sort(s) of the device(s) connected to the HDMI network and (ii) whether or not there is a change in a position(s) of the device(s) connected to the HDMI network. Accordingly, the technique described in Patent Literature 1 has such a problem that there is an increase in load on the television in recognizing the devices on the HDMI network.

The present invention is made in view of the problems. A main object of the present invention is to provide a master device which can have a reduction in load on the master device in recognizing a slave device(s) on a network, as compared with a case where the master device confirms, at certain time intervals, whether or not there is the slave device(s) on the network.

### Solution to Problem

In order to attain the object, a master device of the present invention, constituting a network in combination with a slave device in such a manner that the master device and the slave device are connected to each other, includes: registering means for registering a first address and a second address in a map table so that the first address and the second address are associated with each other, the first address and the second address being notified by a slave device when the slave device is newly connected to the network, the first address identifying the slave device newly connected to the network among a slave device(s) connected to the network by a sort of the slave device newly connected to the network, the second address identifying the slave device newly connected to the network among the slave device(s) connected to the network by a location of the slave device newly connected to the network; issuing means for, in a case where a second address which is identical with the second address notified by the slave device newly connected to the network has been already registered in the map table, issuing a confirmation command for confirming whether or not, on the network, there is a target slave device having a first address associated with the second address which has been already registered; and deleting means for, in a case where there is no target slave device on the network, deleting the second address designating the target slave device from the map table.

According to the master device of the present invention, in a case where the master device detects connection of a slave device to the master device, the master device registers a first address and a second address notified by the slave device in the map table so that the first address and the second address are associated with each other. Further, in a case where a second address which is identical with the second address thus notified has been already registered in the map table, the master device confirms whether or not, on the network, there is a target slave device having a first address associated with the second address identical with the second address thus notified. Then, in a case where there is no target slave device on the network, the master device deletes the second address designating the target slave device from the map table.

With the arrangement, the master device of the present invention can recognize a slave device(s) connected to the network constituted by master device and the slave device(s) connected to the master device, while the notification of the first address and the second address from the slave device newly connected to the master device serves as a trigger. That is, the master device can confirm whether or not there is a slave device which has been already disconnected from the network.

As described above, the master device of the present invention confirms presence of a slave device(s) on the network while using the notification of the first address and the second address from the slave device newly connected to the master device as a trigger. Accordingly, it is possible to prevent unnecessary confirmation of the presence of the slave device(s) on the network when there is no change in the slave(s) on the network.

The master device of the present invention therefore has an effect of reducing a load on the master device in recognizing the slave device(s) on the network, as compared with a case where the master device confirms, at certain time intervals, whether or not there is the slave device(s) on the network.

In order to attain the object, a method of the present invention, for updating a map table in a master device which constitutes a network in combination with a slave device in such a manner that the master device and the slave device are connected to each other, includes the steps of: registering a first address and a second address in a map table so that the first address and the second address are associated with each other, the first address and the second address being notified by a slave device when the slave device is newly connected to the network, the first address identifying the slave device newly connected to the network among a slave device(s) connected to the network by a sort of the slave device newly connected to the network, the second address identifying the slave device newly connected to the network among the slave device(s) connected to the network by a location of the slave device newly connected to the network; in a case where a second address which is identical with the second address notified by the slave device newly connected to the network has been already registered in the map table, issuing a confirmation command for confirming whether or not, on the network, there is a target slave device having a first address associated with the second address which has been already registered; and in a case where there is no target slave device on the network, deleting the second address designating the target slave device from the map table.

With the arrangement, it is possible to have the same effect as that of the master device of the present invention.

Additional objects, features, and strengths of the present invention will be made clear by the description below. Further, the advantages of the present invention will be evident from the following explanation in reference to the drawings.

### Advantageous Effects of Invention

According to a master device of the present invention, in a case where the master device detects connection of a slave device to the master device, the master device registers a first address and a second address notified by the slave device in the map table so that the first address and the second address are associated with each other. Further, in a case where a second address which is identical with the second address thus notified has been already registered in the map table, the master device confirms whether or not, on the network, there is a target slave device having a first address associated with the second address identical with the second address thus notified. Then, in a case where there is no target slave device on the network, the master device deletes the second address designating the target slave device from the map table.

As described above, the master device of the present invention confirms presence of a slave device(s) on the network while using, as a trigger, the notification of the first address and the second address from the slave device newly connected to the master device. Accordingly, it is possible to prevent unnecessary confirmation of the presence of the slave device(s) on the network when there is no change in the slave(s) on the network. The master device of the present invention therefore has an effect of reducing a load on the master device in recognizing the slave device(s) on the network, as compared with a case where the master device confirms the slave device(s) on the network at certain time intervals.

### Brief Description of Drawings

Fig. 1

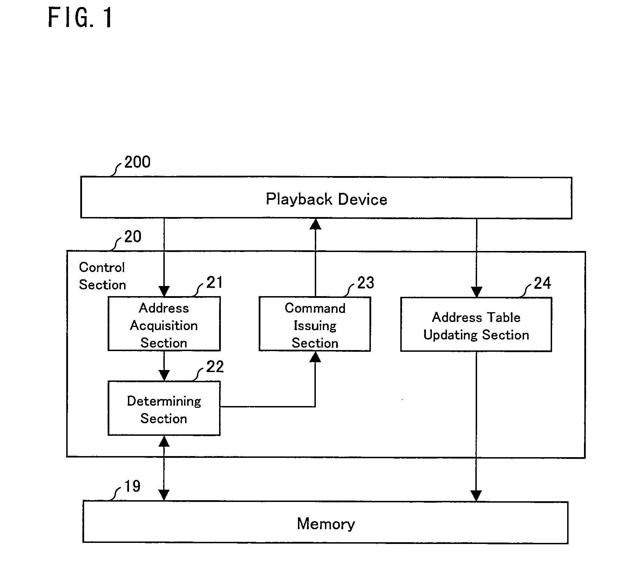

   Fig. 1 is a block diagram illustrating a main part of a control section of a TV in accordance with an embodiment of the present invention.
Fig. 2

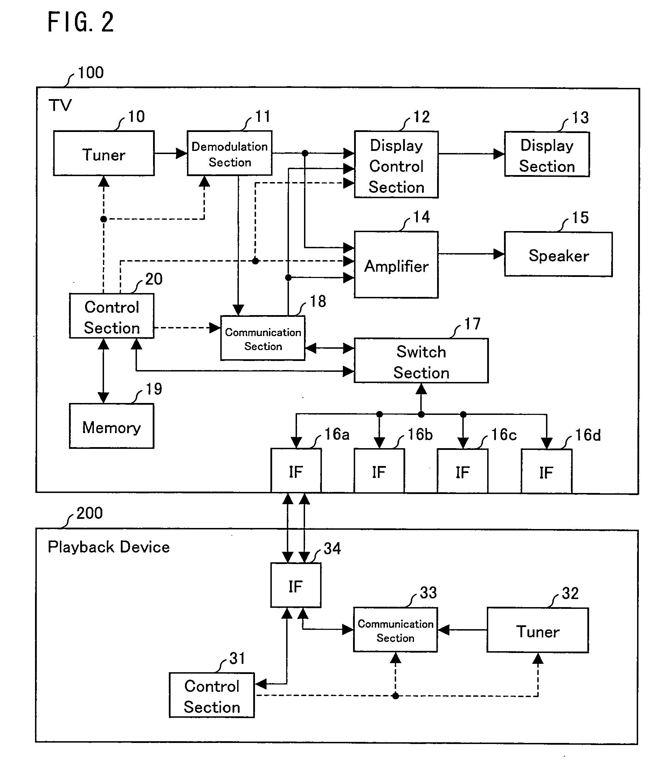

   Fig. 2 is a block diagram illustrating a main part of the TV of the present embodiment.
Fig. 3

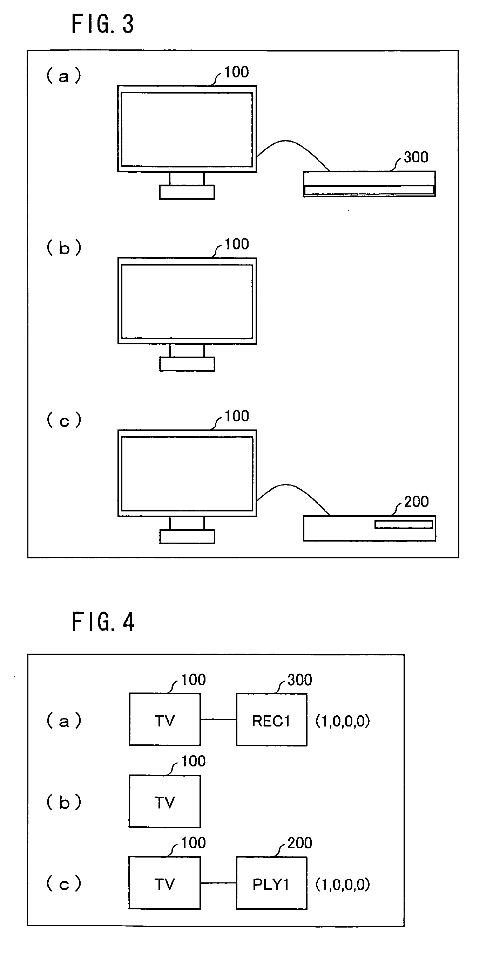

   Fig. 3 is a view illustrating how a connection state between the TV of the present embodiment and devices connected to the TV is changed: (a) of Fig. 3 illustrated a state where a recording device is connected to the TV, (b) of Fig. 3 illustrates a state where the recording device is disconnected from the TV, and (c) of Fig. 3 illustrates a playback device is newly connected to the TV.
Fig. 4
   Fig. 4 is a view illustrating a physical address allocated to devices connected to the TV of the present embodiment: (a) of Fig. 4 illustrates allocation of a physical address in the state illustrated in (a) of Fig. 3, (b) of Fig. 4 illustrates allocation of a physical address in the state illustrated in (b) of Fig. 3, and (c) of Fig. 4 illustrates allocation of a physical address in the state illustrated in (c) of Fig. 3.
Fig. 5

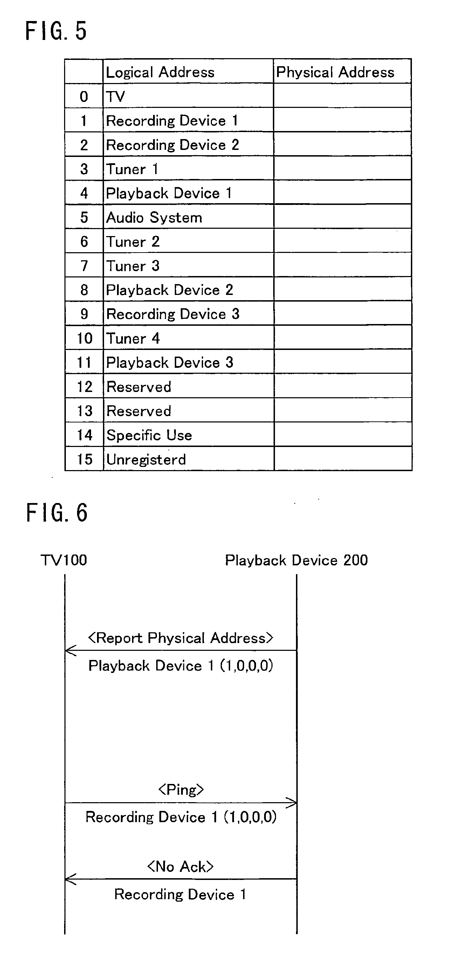

   Fig. 5 is a view showing an example of an address table which is stored in the TV of the present embodiment.
Fig. 6
   Fig. 6 is a sequence diagram showing a process of updating the address table in a case where the playback device is connected to the TV of the present invention.
Fig. 7

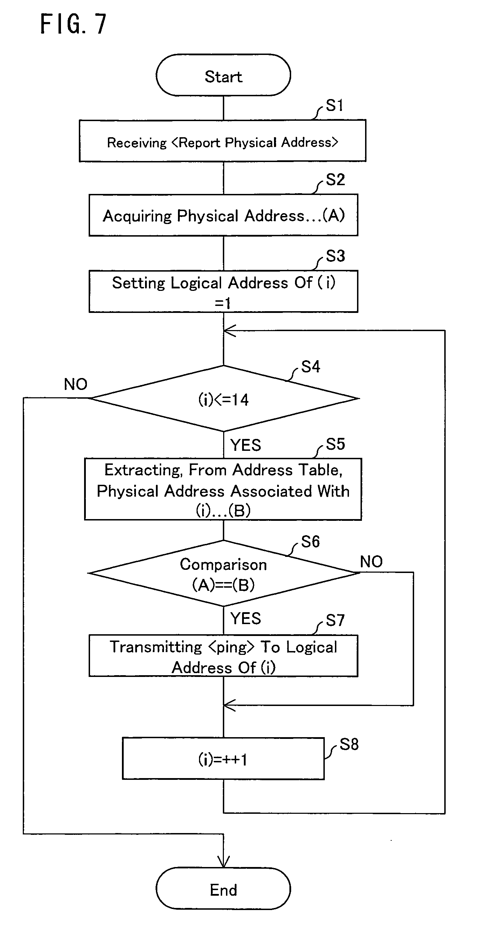

   Fig. 7 is a flowchart showing a process in which the TV of the present embodiment issues <Ping> command.
Fig. 8

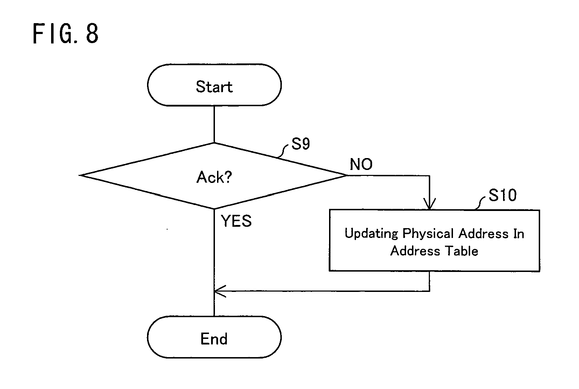

   Fig. 8 is a flowchart showing a process in which the TV of the present embodiment updates the address table.

### Description of Embodiments

One embodiment of a master device of the present invention is described below with reference to Figs. 1 through 7. The present embodiment is explained with an example in which the master device and a slave device are connected to each other via an HDMI network. Further, according to the present embodiment, the master device is a television receiver (hereinafter, referred to as "TV"), and the slave device is a playback device. As a matter of course, the master device is not limited to the TV, and may be, for example, a personal computer (PC), a mobile terminal device, a mobile phone, or audio equipment, each of which has a function of receiving a content. Note that the master device of the present embodiment is a device which serves as a route device on the HDMI network.

First, the following description deals with a main arrangement of the TV of the present embodiment with reference to Fig. 2. Fig. 1 is a block diagram illustrating a main arrangement of a TV 100. Fig. 1 illustrates not only the TV 100 but also a playback device 200 (see Fig. 2) which is not a component of the TV 100, so that the present invention can be understood easily.

### (Outline of HDMI)

Here, before explaining the arrangement of the TV 100, the following description deals with an outline of an HDMI via which the TV 100 and the playback device 200 are connected to each other.

As illustrated in Fig. 2, the TV 100 and the playback device 200 are connected to each other via an HDMI cable. The HDMI cable is constituted by a plurality of lines including a stream line via which a content (video/audio signal) is transmitted and a CEC line via which a CEC (Consumer Electronics Control) command is transmitted.

The CEC command is a command (control signal) based on a CEC protocol standardized in the HDMI. In the CEC, a logical address (a type of a device) and a physical address (a location of a device) are acquired for each of the device(s) connected to the HDMI network via the HDMI cable. By causing a CEC command to include information designating the logical address and the physical address, it is possible to transmit the CEC command to a target device.

According to an HDMI-CEC, the logical addresses of 0 through 15 can be used, and each of the logical addresses of 0 through 15 is a unique name in the HDMI network (excluding the logical address of 15). As described above, the logical address differs depending on a type of the device connected to the HDMI network.

The physical address is a unique name in the HDMI network. However, the physical address is automatically adjusted in a case where an external device is connected to or disconnected from the HDMI network. The physical address has an address made of 5 layers. Generally, the address is described as (n. n. n. n). The route device on the HDMI network has a physical address of (0. 0. 0. 0) usually. A first device directly connected to the route device has a physical address of (1. 0. 0. 0). A second device directly connected to the route device has a physical address of (2. 0. 0. 0). Further, a first device connected to the above first device directly connected to the route device has a physical address of (1. 1. 0. 0).

Furthermore, the CEC command includes not only a command for specifying, with the logical address, a target device of the command to be executed but also a broadcast command which does not specify the target device of the command to be executed. The broadcast command is transmitted to all the devices connected to the same HDMI network.

### (Arrangement of TV 100)

Next, the following description deals with the arrangement of the TV 100. As illustrated in Fig. 2, the TV 100 includes a tuner 10, a demodulating section 11, a display control section 12, a display section 13, an amplifier 14, a speaker 15, an interface (IF) 16a, an interface 16b, an interface 16c, an interface 16d, a switch section 17, a communication section 18, a memory 19, and a control section 20. Each of these members is described below.

### (Tuner 10)

The tuner 10 receives content data externally supplied and transmits the content data to the demodulating section 11. The tuner 10 can switch the content data to be received in accordance with an instruction received from the control section 20.

### (Demodulating section 11)

The demodulating section 11 demodulates the content data received by the tuner 10. The demodulating section 11 outputs video data included in the content data thus demodulated to the display control section 12. Further, the demodulating section 11 outputs audio data included in the content data thus demodulated to the amplifier 14. Furthermore, the demodulating section 11 transmits the content data thus demodulated to the communication section 18.

### (Display control section 12)

The display control section 12 supplies, to the display section 13, the video data received from the demodulating section 11 or the video data received from the communication section 18.

### (Display section 13, amplifier 14, speaker 15)

The display section 13 is a display for displaying the video data received from the display control section 12. Further, the amplifier 14 outputs, to the speaker 15, the audio data received from the demodulating section 11 or the audio data received from the communication section 18. The speaker 15 outputs the audio data received from the amplifier 14.

### (Interfaces 16a through 16d)

The interfaces 16a through 16d are HDMI standard interfaces. Each of the interfaces 16a through 16d transmits content data and a CEC command to a device(s) to which the interface is connected. Further, each of the interfaces 16a through 16d receives content data and a CEC command transmitted from the device to which the interface is connected.

### (Switch section 17)

On receipt of an instruction from the control section 20, the switch section 17 (i) determines which one of the interfaces 16a through 16d the switch section 17 transmits content data and a CEC command to, and (ii) transmits the content data and the CEC command to the interface thus determined.

Further, the switch section 17 receives, via a corresponding one of interfaces 16a through 16d, content data and a CEC command transmitted from the playback device 200. Among the data thus received, the switch section 17 transmits the content data to the communication section 18, and transmits the CEC command to the control section 20.

### (Communication section 18)

On receipt of an instruction from the control section 20, the communication section 18 transmits content data to the device(s) to which one(s) of the interfaces 16a through 16d is connected. Further, the communication section 18 receives content data transmitted from the device(s) to which one(s) of the interfaces 16a through 16d is connected.

The communication section 18 outputs video data included in the content data thus received to the display control section 12, and audio data included in the content data thus received to the amplifier 14.

### (Memory 19)

An address table (map table) is stored in the memory 19. For each of the devices connected to the interfaces 16a through 16d, a physical address and a logical address are stored in the address table so as to be associated with each other. Details of the address table will be described later with reference to another drawing.

It is preferable that the memory 19 is a nonvolatile memory in which stored content would not be deleted even if the TV 100 is turned off.

### (Control section 20)

The control section 20 controls all processes carried out by the TV 100. Further, the control section 20 issues a CEC command for controlling each of the devices which are connected to the TV 100 via the HDMI cable.

Details of an arrangement of the control section 20 will be described later with reference to Fig. 1, and an explanation of the arrangement of the control section 20 is omitted here.

### (Playback device 200)

The following description briefly explains an arrangement of the playback device 200 with reference to Fig. 2. The playback device 200 includes a control section 31, a tuner 32, a communication section 33, and an interface (IF) 34 (see Fig. 1).

The control section 31 controls the tuner 32 and the communication section 33. Further, the control section 31 executes a process based on a CEC command received from the TV 100 via a CEC line. Furthermore, the control section 31 transmits a CEC command from the interface 34 to the TV 100 via the CEC line of the HDMI cable.

The tuner 32 acquires content data from a recording medium (not illustrated) or an internal memory (not illustrated), and outputs the content data thus acquired to the communication section 33.

The communication section 33 transmits, from the interface 34 to the TV 100 via a stream line of the HDMI cable, the content data received from the tuner 32. Further, the interface 34 is an HDMI standard interface.

### (Arrangement of control section 20)

Next, the following description deals with details of the arrangement of the control section 20 with reference to Fig. 1. Fig. 1 is a block diagram illustrating a main part of the control section 20 of the TV 100.

The control section 20 includes an address acquisition section 21, a determining section 22, a command issuing section 23, and an address table updating section 24 (see Fig. 1). Details of each of the members are described below.

### (Address acquisition section 21)

The address acquisition section 21 acquires a physical address and a logical address from the playback device 200 which is connected to the interface 16a of the TV 100. Further, the address acquisition section 21 registers the physical address and the logical address thus acquired in the map table so that the physical address and the logical address are associated with each other.

### (Determining section 22)

The determining section 22 determines whether or not a physical address which is identical with the physical address acquired by the address acquisition section 21 is stored in the address table. In a case where the physical address identical with the physical address thus acquired is stored in the address table, the determining section 22 instructs the command issuing section 23 to issue a confirmation command for confirming whether or not there is a device on the HDMI network in which the TV 100 serves as the route device.

### (Command issuing section 23)

On receipt of the instruction from the determining section 22, the command issuing section 23 issues the confirmation command.

### (Address table updating section 24)

In a case where the address table updating section 24 recognizes an answer with respect to the confirmation command is that there is no device on the HDMI network, the address table updating section 24 updates the address table stored in the memory 19.

### (Case where updating of address table is necessary)

Next, before explaining a process in which the TV 100 updates the address table, the following description deals with an example of a case where the process of updating the address table is necessary, with reference to (a) of Fig. 3 through (c) of Fig. 3, and (a) of Fig. 4 through (c) of Fig. 4.

(a) of Fig. 3 through (c) of Fig. 3 are views illustrating how connection between the TV 100 and other devices is changed. (a) of Fig. 3 illustrates a state where the recording device 300 is connected to the TV 100. (b) of Fig. 3 illustrates a state where the recording device 300 is disconnected from the TV 100. (c) of Fig. 3 illustrates a state where the playback device 200 is newly connected to the TV 100. (a) of Fig. 4 through (c) of Fig. 4 are views illustrating how a physical address is allocated to a device connected to the TV 100. (a) of Fig. 4 is a view illustrating allocation of a physical address in the state illustrated in (a) of Fig. 3.(b) of Fig. 4 is a view illustrating allocation of a physical address in the state where illustrated in (b) of Fig. 3.(c) of Fig. 4 is a view illustrating allocation of a physical address in the state illustrated in (c) of Fig. 3.

(a) of Fig. 3 through (c) of Fig. 3 show a case where either the playback device 200 or the recording device 300 is connected to the interface 16a of the TV 100 illustrated in Fig. 2. Note, however, that this is merely an example, and the present embodiment is not limited to this.

First, the recording device 300 is connected to the TV 100 via the interface 16a (see (a) of Fig. 3). Here, a physical address of (1. 0. 0. 0) is allocated to the recording device 300 (see (a) of Fig. 4). Then, the recording device 300 is disconnected from the TV 100 (see (b) of Fig. 3). As a result, there is no device having the physical address of (1. 0, 0, 0) on a network (see (b) of Fig. 4).

Next, the playback device 200 is newly connected to the TV 100 via the interface 16a, to which the recording device 300 has been connected (see (c) of Fig. 3). Here, a physical address of (1. 0. 0. 0) is allocated to the playback device 200 (see (c) of Fig. 4).

As described above, in a case where the recording device 300 connected to the TV 100 is disconnected from the TV 100, and the playback device 200 is newly connected to the interface to which the recording device 300 has been connected, the physical address allocated to the playback device 200 newly connected to the interface is identical with the physical address allocated to the recording device 300 which has been connected to the interface.

In this case, the TV 100 does not recognizes such disconnection of the recording device 300 but wrongly recognizes that the physical address of (1. 0. 0. 0) is allocated to both the playback device 200 newly connected to the interface and the recording device 300 which has been connected to the interface and disconnected from the interface. In fact, however, the recording device 300 has been already disconnected from the interface, and a command and content data transmitted from the TV 100 to the recording device 300 are not processed. Accordingly, in such a case, it is necessary to update the address table stored in the TV 100 so that the latest information is stored in the address table.

### (Details of address table)

Here, the following description deals with details of the address table stored in the memory 19 with reference to Fig. 5. Fig. 5 is a view illustrating an example of the address table stored in the TV 100.

According to a CEC protocol, logical addresses of 0 through 15 (a total of 16 logical addresses) are set, and a device type is allocated to each of the logical addresses in advance (see Fig. 5). For example, a device type of "TV" is allocated to the logical address of "0" (see Fig. 5). Note that, in the present embodiment, the "device type" is the "logical address", unless otherwise noted.

Further, the logical addresses and the physical addresses which indicate locations of the devices on the network are stored in the address table so that the logical addresses and the physical addresses are associated with each other.

That is, the address table is a table indicating, for each of the devices on the network, a type of the device (device type) and a location of the device.

### (Outline of address table updating process)

Next, the following description deals with an outline of a process in which the TV 100 updates the address table, with reference to Fig. 6. Fig. 6 is a sequence diagram showing how the process of updating the address table is carried out in a case where the playback device 200 is connected to the TV 100.

Note that the following description deals with, as an example, a case where the playback device 200 acquires a physical address (1. 0. 0. 0) which is identical with a physical address of a device which has been connected to the TV 100 (as described above with reference to (a) of Fig. 3 through (c) of Fig. 3, and (a) of Fig. 4 through (c) of Fig. 4).

In a case where the playback device 200 detects connection between the playback device 200 and the TV 100, the playback device 200 acquires the physical address allocated to the interface 16a of the TV 100, and sets a logical address by itself. Note that the following description deals with, as an example, a case where the playback device 200 acquires a physical address of (1. 0. 0. 0), and acquires a logical address of "Playback Device 1".

Then, the playback device 200 transmits the physical address of (1. 0. 0. 0) thus acquired from the interface 34 to the TV 1000 via the CEC line of the HDMI cable. The playback device 200 transmits the physical address to the TV 100 with the use of <report physical address>. Here, the TV 100 receives a notification that "Playback Device 1" has the physical address of (1. 0. 0. 0).

As described above, according to the present embodiment, the playback device 200 detects by itself the connection between the playback device 200 and the TV 100, and notifies by itself the TV 100 of the physical address of the playback device 200.

On receipt of the notification, the TV 100 determines whether or not the physical address of (1. 0. 0. 0) received from the playback device 200 (i.e., the device having the logical address of "Playback Device 1") is stored in the address table stored in the memory 19.

In a case where the physical address of (1. 0. 0. 0) received from the playback device 200 has been already stored in the address table, that is, the physical address of (1. 0. 0. 0) has been already associated with another logical address (here, "Recording Device 1"), the TV 100 makes an inquiry as to whether or not, on the HDMI network, there is a device having the logical address of "Recording Device 1" which is associated with the physical address of (1. 0. 0. 0) in the address table. Here, the TV 100 makes the inquiry via the CEC line with the use of a <Ping> command.

In a case where the TV 100 recognizes that an answer to the <Ping> command is "No" (<No Ack>), the TV 100 determines that the "Recording Device 1" is not on the HDMI network, and updates the address table. More specifically, the TV 100 deletes the physical address of (1. 0. 0. 0) associated with the logical address of "Recording Device 1" from the address table. Here, according to the present embodiment, the <Ping> command includes (i) a logical address of the TV 100 as sender information and (ii) a logical address of a device to which the command is transmitted, as destination information. In other words, in a case where there is a device corresponding to the destination information on the HDMI network, the TV 100 serving as the sender receives an answer (<Ack>).

In a case where the physical address received from the playback device 200 is not stored in the address table, the TV 100 finishes the process by only storing the logical address of the playback device 200 and the physical address thus notified so that the logical address and the physical address are associated with each other. Further, in a case where the TV 100 recognizes that the answer with respect to the <Ping> command is <Ack>, the TV 100 finishes the process without updating the address table.

In the above explanations, the physical address of the playback device 200 is acquired with the use of <report physical address>, and whether or not there is "Recording Device 1" on the HDMI network is checked with the use of <Ping>. Note, however, that the present embodiment is not limited to this. It is possible to use a command uniquely created by a manufacturer, as long as the command is a CEC command which allows execution of a process similar to the above process.

### (Details of address table updating process)

Next, the following description deals with details of the process of updating the address table in the TV 100, with reference to Figs. 7 and 8. Fig. 7 is a flowchart showing a process in which the TV 100 issues a <Ping> command. Fig. 8 is a flowchart showing a process in which the TV 100 updates the address table.

The following description also deals with, as an example, the case where the playback device 200 connected to the TV 100 has a physical address of (1. 0. 0. 0) which is identical with a physical address of the recording device 300 which has been connected to the TV 100 and disconnected from the TV 100, as described above with reference to (a) of Fig. 3 through (c) of Fig. 3, and (a) of Fig. 4 through (c) of Fig. 4. Further, in the same manner as described above, the following description also deals with, as an example, the case where the physical address of the playback device 200 is acquired with the use of <report physical address>, and whether or not there is "Recording Device 1" on the HDMI network is checked with the use of <Ping>.

First, the address acquisition section 21 of the control section 20 of the TV 100 receives <report physical address> transmitted from the playback device 200 via the CEC line of the HDMI cable (Step S1).

On receipt of <report physical address>, the address acquisition section 21 acquires a physical address of the playback device 200, and outputs the physical address thus acquired to the determining section 22 (Step S2).

On receipt of the physical address from the address acquisition section 21, the determining section 22 sets a logical address of (i) = 1 (Step S3). Then, the determining section 22 determines whether or not the logical address of (i) is not more than 14 (Step S4).

In a case where the determining section 22 determines that the logical address of (i) is not more than 14 (YES in Step S4), the determining section 22 extracts a physical address which is associated with the logical address of (i) in the address table stored in the memory 19 (Step S5). On the other hand, in a case where the determining section 22 determines that the logical address of (i) is more than 14 (NO in Step S4), the TV 100 determines that there is no corresponding physical address, and finishes the process.

After extracting the physical address from the address table, the determining section 22 determines whether or not the physical address of (1. 0. 0. 0) received from the playback device 200 is identical with the physical address extracted from the address table (Step S6).

In a case where the physical address extracted from the address table is (1. 0. 0. 0) (YES in Step S6), the determining section 22 instructs the command issuing section 23 to issue a <Ping> command.

On receipt of an instruction from the determining section 22, the command issuing section 23 transmits a <Ping> command which inquires whether or not, on the network in which the TV 100 serves as the route device, there is a device having the logical address of "Recording Device 1" which is associated with the physical address of (1. 0. 0. 0) in the address table (Step S7). Further, in a case where the <Ping> command is transmitted from the command issuing section 23, the determining section 22 increments "(i)" (Step S8), and returns to Step S4.

Note, that, in a case where the physical address thus extracted is not identical with the physical address received from the playback device 200, that is, in a case where the physical address extracted from the address table is not identical with (1. 0. 0. 0), the determining section 22 also increments "(i)" (Step S8), and returns to Step S4.

Next, the following description deals with a process of modifying the address table, with reference to Fig. 8. In a case where the address table updating section 24 recognizes that an answer with respect to the <Ping> command issued by the command issuing section 23 is "No" (<No Ack>) (NO in Step S9), the address table updating section 24 modifies the address table stored in the memory 19 (Step S10). Specifically, the address table updating section 24 deletes the physical address of (1. 0. 0. 0) of the recording device 300, extracted from the address table in Step S5.

On the other hand, in a case where the address table updating section 24 recognizes that there is an answer from the device having the logical address of "Recording Device 1" (YES in Step S9), the address table updating section 24 does not modify the address table stored in the memory 19.

### (Advantage of TV 100)

As explained above, in a case where the TV 100 detects connection between the TV 100 and the playback device 200, the TV 100 receives a notification of a logical address and a physical address from the playback device 200. The TV 100 causes the address table to store the logical address and the physical address so that the logical address and the physical address are associated with each other. Further, in a case where the physical address which is identical with the physical address thus received has been already stored in the address table, the TV 100 checks whether or not, on the network, there is a device having a logical address which is associated with the physical address identical with the physical address thus received. Then, in a case where, on the network, there is no device having such a logical address, the TV 100 deletes, from the address table, the physical address designating the device having such a logical address.

With the arrangement, the TV 100 can recognize, by using the notification of the logical address and the physical address from the playback device 200 as a trigger, a device(s) on the network constituted by the TV 100 and another device(s) connected to the TV 100. That is, the TV 100 can confirm whether or not there is a device(s) which has been already disconnected from the network.

As described above, the TV 100 confirms whether or not there is a device(s) on the network when a device is disconnected from the network or a device is newly connected to the network. Accordingly, the TV 100 can have a reduction in load on the TV 100 in recognizing a slave device on the network, as compared with a case where the slave device(s) on the network is recognized at certain time intervals.

Fig. 3 illustrates an example in which one TV 100 and one playback device 200 are connected to each other via the HDMI cable so as to constitute the HDMI network. Note, however, that the present embodiment is not limited to this. For example, the HDMI network of the present embodiment may be such that (i) the playback device 200 and the TV 100 are connected to each other, (ii) a third device is connected to the playback device 200, and (iii) a fourth device is further connected to the third device. That is, the HDMI network of the present embodiment can have such an arrangement that a plurality of devices are connected to each other in series (what is called a "daisy chain connection").

In this case, the playback device 200 functions as a slave device with respect to the TV 100, and also functions as a master device with respect to the third device. That is, the third device outputs its content to the playback device 200, and the playback device 200 outputs the content thus supplied to the TV 100, for example.

That is, on the HDMI network in which a total number N of devices are connected to each other in a daisy-chain manner, the nth device from the route device on the HDMI network functions as a slave device with respect to the n + 1th device from the route device on the HDMI network, and functions as a master device with respect to the n - 1th device from the route device on the HDMI network. Note that "n" and "N" are positive integers which (i) are not less than 2, and (ii) satisfy an inequality of N > n. As a matter of course, the nth device from the route device on the HDMI network can function as a slave device with respect to the n - 1th device from the route device on the HDMI network, and can function as a master device with respect to the n + 1th device from the route device on the HDMI network.

Examples of the nth device encompass a BD (Blu-ray Disc) recorder, a mobile phone, a mobile terminal device, a personal computer, and audio equipment. Further, another example of the daisy chain connection may be such that (i) a BD recorder is connected to the TV 100, (ii) a second TV is connected to the BD recorder, and (iii) a second BD recorder is connected to the second TV.

In the above explanations of the present embodiment, the TV 100 and the playback device 200 are connected to each other via a line, namely, the HDMI cable. Note, however, that the present embodiment is not limited to this. It is possible to have an arrangement in which the TV 100 and the playback device 200 are connected to each other wirelessly by the use of an HDMI wireless unit, as a matter of course.

### (Program and recording medium)

The control section 20 of the TV 100 may be constituted by a hardware logic. Alternatively, the control section 20 may be realized by software by use of a CPU (Central Processing Unit) as described below.

That is, the control section 20 includes: the CPU (such as an MPU) which executes an instruction of a program realizing each of the functions described above; a ROM (Read Only Memory) in which the program is stored; a RAM (Random Access Memory) which develops the program into an executable format; and a storage device (storage medium), such as a memory, in which the program and various kinds of data are stored.

Further, regardless of whether or not the program is fixed in a program memory of the control section 20, the object of the present invention can be achieved in the following manner: (i) a storage medium in which a program code (an execute form program, an intermediate code program, or a source program) is stored is supplied to the TV 100, and (ii) the TV 100 reads out the program code from the storage medium and executes the program code.

The storage medium is not limited to a specific structure or a specific sort. That is, examples of the storage medium encompass: tapes, such as a magnetic tape and a cassette tape; disks including a magnetic disk, such as a floppy disk (registered trademark) and a hard disk, and an optical disk, such as a CD-ROM, an MO, an MD, a DVD, and a CD-R; cards, such as an IC card (including a memory card) and an optical card; and semiconductor memories, such as a mask ROM, an EPROM, an EEPROM, and a flash ROM.

Further, the object of the present invention can be achieved by arranging the control section 20 (or the TV 100) to be connectable with a communication network. In this case, the program code is supplied to the control section 20 via the communication network. The communication network is not limited to a specific sort or a specific type, as long as the communication network can supply the program code to the control section 20. Examples of the communication network encompass: the Internet, an intranet, an extranet, a LAN, an ISDN, a VAN, a CATV communication network, a virtual private network, a telephone line network, a mobile communication network, and a satellite communication network.

A transmission medium constituting the communication network is also not limited to a specific arrangement or a specific sort. The transmission medium may be an arbitral medium, as long as it can transmit the program code. For example, it is possible to use, as the transmission medium, a wired line such as a line in compliance with an IEEE 1394 standard, a USB line, a power line, a cable TV line, a telephone line, and an ADSL (Asynchronous Digital Subscriber Loop) line. Moreover, it is possible to use, as the transmission medium, (i) a wireless line utilizing an infrared ray used in IrDA or a remote controller, (ii) a wireless line which is in compliance with a Bluetooth standard (registered trademark) or an IEEE802.11 wireless standard, or (iii) a wireless line utilizing an HDR, a mobile phone network, a satellite line, or a terrestrial digital network. Note that, the present invention can be realized by a computer data signal which is realized by electronic transmission of the program code and which is embedded in a carrier wave.

Further, the master device of the present invention is preferably arranged such that the confirmation command is made of a header which includes a first address of the master device as sender information, and includes a first address of the target slave device as destination information.

With the arrangement, it is possible to confirm, with the use of a simple confirmation command, whether or not there is the target slave device on the network.

It is therefore possible to have a reduction in load on the master device in issuing a command.

Furthermore, the master device of the present invention is preferably arranged such that the issuing means issues a CEC command on the basis of an HDMI standard.

Moreover, the scope of the present invention encompass: a program for causing the master device of the present invention to operate, the program causing a computer to function as each mans described above; and a computer-readable storage medium in which the program is stored.

The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

A master device of the present invention can be suitably applied to a TV, audio equipment, and the like.

### Reference Signs List

[0107]
10: Tuner
11: Demodulating section
12: Display control section
13: Display section
14: Amplifier
15: Speaker
16a, 16b, 16c, 16d: Interface
17: Switch section
18: Communication section
19: Memory
20: Control section
21: Address acquisition section (registering means)
22: Determining section
23: Command issuing section (issuing means)
24: Address table updating section (deleting means)
31: Control section
32: Tuner
33: Communication section
34: Interface
100: TV (master device)
200: Playback device (slave device)
300: Recording device

## Claims

1. cording device A master device constituting a network in combination with a slave device in such a manner that the master device and the slave device are connected to each other, comprising:
registering means for registering a first address and a second address in a map table so that the first address and the second address are associated with each other, the first address and the second address being notified by a slave device when the slave device is newly connected to the network, the first address identifying the slave device newly connected to the network among a slave device(s) connected to the network by a sort of the slave device newly connected to the network, the second address identifying the slave device newly connected to the network among the slave device(s) connected to the network by a location of the slave device newly connected to the network;
issuing means for, in a case where a second address which is identical with the second address notified by the slave device newly connected to the network has been already registered in the map table, issuing a confirmation command for confirming whether or not, on the network, there is a target slave device having a first address associated with the second address which has been already registered; and
deleting means for, in a case where there is no target slave device on the network, deleting the second address designating the target slave device from the map table.

2. ting the target slave device from the map table. The master device as set forth in claim 1, wherein:
the confirmation command is made of a header which includes a first address of the master device as sender information, and includes a first address of the target slave device as destination information.

3. as destination information. The master device as set forth in claim 1 or 2, wherein:
the issuing means issues a CEC command on the basis of an HDMI standard.

4. DMI standard. A method of updating a map table in a master device which constitutes a network in combination with a slave device in such a manner that the master device and the slave device are connected to each other, the method comprising the steps of:
registering a first address and a second address in a map table so that the first address and the second address are associated with each other, the first address and the second address being notified by a slave device when the slave device is newly connected to the network, the first address identifying the slave device newly connected to the network among a slave device(s) connected to the network by a sort of the slave device newly connected to the network, the second address identifying the slave device newly connected to the network among the slave device(s) connected to the network by a location of the slave device newly connected to the network;
in a case where a second address which is identical with the second address notified by the slave device newly connected to the network has been already registered in the map table, issuing a confirmation command for confirming whether or not, on the network, there is a target slave device having a first address associated with the second address which has been already registered; and
in a case where there is no target slave device on the network, deleting the second address designating the target slave device from the map table.

5. evice from the map table. A program for causing a computer included in a master device recited in any one of claims 1 through 3 to operate,
the program causing the computer to function as each of said means.

6. means. A computer-readable storage medium in which a program recited in claim 5 is stored.

7. recited in claim 5 is stored. A master device recited in any one of claims 1 through 3, wherein:
the master device is a television receiver.
